# EUROPÄISCHE PATENTSCHRIFT

(11) **EP 1 388 996 B1**
(45) Veröffentlichungstag und Bekanntmachung des Hinweises auf die Patenterteilung: **08.06.2016**
(21) Anmeldenummer: 03102149.6
(22) Anmeldetag: 15.07.2003
(51) Int. Cl.: H04M 3/42, H04M 7/00, H04M 3/56

(54) **Verfahren und Anordnung zum Steuern einer Konferenzschaltung in einem paketorientierten Kommunikationsnetz**
Method and apparatus for controlling a conference circuit in a packet orientated communication network
Procédé et dispositif pour commander un circuit de conférence dans un réseau de communication par paquets

(30) Priorität: 09.08.2002 DE 10236600
(43) Veröffentlichungstag der Anmeldung: 11.02.2004
(73) Patentinhaber: Unify GmbH & Co. KG, 81379 München (DE)
(72) Erfinder: Klaghofer, Karl, 81373, München (DE)
(74) Vertreter: Fritzsche, Thomas

(56) Entgegenhaltungen:
- EP-A- 1 091 550
- US-A1- 2002 089 939
- US-A1- 2002 107 923
- US-B1- 6 426 769

## Beschreibung

Zeitgemäße Kommunikationssysteme unterstützen neben Zweipunktverbindungen in der Regel auch Konferenzschaltungen, d.h. Verbindungen zwischen drei oder mehr Teilnehmern. Konferenzschaltungen können beispielsweise zwischen Endgeräten zur Sprach-, Video- und/oder Multimediakommunikation oder zwischen Personalcomputern aufgebaut werden.

Im Rahmen einer gegenwärtig stattfindenden Entwicklung werden Kommunikationsverbindungen und insbesondere auch Echtzeitverbindungen in zunehmendem Maße auch über paketorientierte Kommunikationsnetze, wie beispielsweise lokale Netze (local area networks) oder Weitverkehrsnetze (wide area networks), wie z.B. das Internet, geführt. Auf dieser Technik basiert beispielsweise die sogenannte Internettelefonie, die häufig auch als VoIP-Telefonie (VoIP: Voice/Video over Internet Protocol) bezeichnet wird.

Bei der Migration von leitungsorientierten Kommunikationssystemen zu paketorientierten Kommunikationssystemen, wie z.B. VoIP-Systemen, haben insbesondere Hersteller von leitungsorientierten Vermittlungseinrichtungen, sogenannten PBX-Einrichtungen (PBX: Private Branch Exchange), ein großes Interesse daran, vorhandene leitungsorientierte Konferenzeinrichtungen und Konferenzsoftware weiterzuverwenden. Infolgedessen werden in paketorientierten Kommunikationsnetzen häufig traditionelle, leitungsorientierte Vermittlungseinrichtungen eingesetzt, die um paketorientierte Schnittstellen und paketorientierte Transportprotokolle ergänzt sind. Derart erweiterte Vermittlungseinrichtungen werden häufig auch als IP-PPX bezeichnet.

Gemäß dem bisherigen Stand der Technik werden beim Verwenden leitungsorientierter Konferenzeinrichtungen in paketorientierten Kommunikationsnetzen die Nutzdatenpakete meist mittels traditioneller, leitungsorientierter Verarbeitungsressourcen, wie z.B. einem TDM-Koppelfeld (TDM: Time Division Multiplex) oder einer Konferenzbrücke, bearbeitet, um so beispielsweise verschiedene Nutzdatenströme zu mischen.

Diese Art der Nutzdatenbearbeitung bedingt jedoch häufig mehrfache Übergänge zwischen Paketvermittlung (VoIP) und Leitungsvermittlung (TDM), wodurch z.B. die Sprachqualität erheblich verschlechtert wird. Weiterhin besteht in diesem Fall eine starke Abhängigkeit von vorhandener leitungsorientierter Konferenzhardware, wodurch eine Migration hin zu einem nativen, internetprotokollbasierten System sehr erschwert wird.

EP 1 091 550 A2 offenbart einen Koordinator für Mehrpunktsteuerungseinheiten (MCUC), der alle Konferenzen in einem Telekommunikationssystem verfolgt und ermittelt, wie sie am besten konfiguriert und im Laufe der Zeit modifiziert werden können.

US 2002/0089939 A1 offenbart ein System und Verfahren zum Aufbau einer Telekonferenz mit mehreren Teilnehmern in einem paketvermittelten Funktelekommunikationsnetz, in dem ein Gatekeeper (GK) ein anstehendes Gespräch mit zwei Teilnehmern zwischen einer ersten Partei und einer zweiten Partei aufbaut.

Es ist Aufgabe der vorliegenden Erfindung, ein Verfahren sowie eine Anordnung zum Steuern einer Konferenzschaltung in einem paketorientierten Kommunikationsnetz anzugeben, wodurch die oben angegebenen Nachteile vermieden werden können.

Gelöst wird diese Aufgabe durch ein Verfahren mit den Merkmalen des Patentanspruchs 1 sowie durch einen Kommunikationsserver mit den Merkmalen des Patentanspruchs 8.

Erfindungsgemäß wird zum Steuern einer Konferenzschaltung zwischen mehreren Endeinrichtungen in einem paketorientierten Kommunikationsnetz eine leitungsorientierte Konferenzsteuersignalisierung über ein paketorientiertes Transportprotokoll, z.B. das Internetprotokoll, zwischen einer ersten der Endeinrichtungen und einem erfindungsgemäßen Kommunikationsserver des Kommunikationsnetzes übertragen. Als Kommunikationsserver kann beispielsweise eine um paketorientierte Schnittstellen und Protokolle erweiterte Vermittlungseinrichtung, d.h. eine sogenannte IP-PBX, eingesetzt werden. Der Kommunikationsserver verfügt über ein leitungsorientierte Konferenzmodul zum Verarbeiten der leitungsorientierten Konferenzsteuersignalisierung. Erfindungsgemäß wird durch den Kommunikationsserver abhängig von der Konferenzsteuersignalisierung ein Aufbau von paketorientierten Medienkanälen, wie z.B. Audio-, Video- und/oder Multimediakanälen zwischen den Endeinrichtungen und einer paketorientierten Konferenzmischeinrichtung veranlasst. Als Konferenzmischeinrichtung kann beispielsweise eine sogenannte MCU (Multipoint Control Unit) eingesetzt werden. Eine derartige Konferenzmischeinrichtung dient zum Mischen von Medienströmen verschiedener Konferenzteilnehmer und zum Verteilen der gemischten Medienströme an diese Konferenzteilnehmer.

Ein wesentlicher Vorteil der Erfindung besteht darin, dass vorhandene leitungsorientierte Konferenzsteuereinrichtungen und/oder leitungsorientierte Konferenzsteuersoftware sowohl beim Kommunikationsserver als auch bei den Endeinrichtungen weiter verwendbar sind. Insbesondere können vorhandene leitungsorientierte Konferenzsteuerprotokolle zwischen den Endeinrichtungen und dem Kommunikationsserver weiter verwendet werden. Dadurch wird eine sanfte Migration in Richtung paketorientierter Systeme erheblich erleichtert. Dies wiederum reduziert einen jeweils erforderlichen Entwicklungsaufwand.

Weiterhin können durch die Einbeziehung der paketorientierten Konferenzmischeinrichtung Übergänge zwischen leitungsorientierter und paketorientierter Medienübertragung vermieden werden, was sich positiv auf die Sprach- bzw. Videoqualität bei Konferenzschaltungen auswirkt. Zudem wird durch die Einbeziehung der Konferenzmischeinrichtung die Abhängigkeit von der Konferenz-Hardware vorhandener Vermittlungseinrichtungen verringert. Dies vereinfacht wiederum eine Migration zu nativen paketorientierten Kommunikationssystemen.

Vorteilhafte Ausführungsformen und Weiterbildungen der Erfindung sind in den abhängigen Ansprüchen angegeben.

Nach einer vorteilhaften Ausführungsform der Erfindung kann für bestehende, erste Signalisierungskanäle zwischen dem Kommunikationsserver und den Endeinrichtungen durch den Kommunikationsserver jeweils ein paketorientierter, zweiter Signalisierungskanal zwischen dem Kommunikationsserver und der Konferenzmischeinrichtung eingerichtet und dem jeweiligen ersten Signalisierungskanal zugeordnet werden. Die Zuordnung kann mittels einer im Kommunikationsserver vorgesehenen Zuordnungstabelle verwaltet werden. Einander zugeordnete erste und zweite Signalisierungskanäle können derart miteinander gekoppelt werden, dass eine jeweilige Signalisierung zwischen einer jeweiligen Endeinrichtung und der Konferenzmischeinrichtung durch den Kommunikationsserver transparent weitergeleitet oder gegebenenfalls abhängig von der Konferenzsteuersignalisierung oder einem Konferenzstatus umgesetzt werden.

Weiterhin kann ein jeweiliger erster und/oder zweiter Signalisierungskanal durch den Kommunikationsserver der Konferenzsteuersignalisierung zwischen dem Kommunikationsserver und der ersten Endeinrichtung zugeordnet werden.

Gemäß einer weiteren vorteilhaften Ausführungsform der Erfindung kann der Aufbau der Medienkanäle zumindest teilweise parallel erfolgen. Auf diese Weise kann ein zum Aufbau der Konferenzschaltung erforderlicher Zeitbedarf erheblich verringert werden.

Weiterhin kann der Kommunikationsserver zu den Endeinrichtungen im Rahmen des Aufbaus der Medienkanäle jeweils eine erste Signalisierungsmeldung, durch die ein Schließen geöffneter Medienkanäle veranlasst wird, sowie eine zweite Signalisierungsmeldung, durch die ein Öffnen eines Medienkanals zur Konferenzmischeinrichtung veranlasst wird, übermittelt werden. Die ersten und/oder zweiten Signalisierungsmeldungen können vorzugsweise über einen jeweiligen ersten Signalisierungskanal übertragen werden. Die ersten und/oder zweiten Signalisierungsmeldungen werden im allgemeinen in Abhängigkeit von Meldungen der Konferenzmischeinrichtung und der Konferenzsteuersignalisierung übermittelt. Vorzugsweise kann als erste und/oder zweite Signalisierungsmeldung eine Kommunikationsfähigkeiten eines jeweiligen Kommunikationspartners angebende Meldung übermittelt werden. Eine derartige Meldung wird häufig auch als Terminal-Capability-Set-Meldung bezeichnet. Das Schließen geöffneter Medienkanäle kann dabei durch eine Meldung mit leerer Fähigkeitsmenge als erster Signalisierungsmeldung und das Öffnen eines Medienkanals durch eine Meldung mit nichtleerer Fähigkeitsmenge als zweiter Signalisierungsmeldung veranlasst werden.

Ferner kann der Kommunikationsserver im Rahmen des Aufbaus der Medienkanäle mindestens eine Kanalaufbaumeldung mit Informationen über die an der Konferenzschaltung zu beteiligenden Endeinrichtungen zur Konferenzmischeinrichtung übermitteln. Die Übermittlung kann vorzugsweise über einen jeweiligen zweiten Signalisierungskanal erfolgen. Als Kanalaufbaumeldung kann z.B. eine Verbindungsaufbau- oder Setup-Meldung übermittelt werden.

Nach einer vorteilhaften Weiterbildung der Erfindung können der Kommunikationsserver und die Konferenzmischeinrichtung einander in Abhängigkeit von ihrer Betriebslast dynamisch zugeordnet werden. Auf diese Weise kann eine Konferenzmischeinrichtung ihre Verarbeitungsressourcen mehreren und/oder wechselnden Kommunikationsservern zur Verfügung stellen. Durch die Vermeidung einer festen Zuordnung zwischen Konferenzserver und Konferenzmischeinrichtung kann die Wahrscheinlichkeit von Überlastsituationen oder Blockiersituationen verringert werden.

Ein Ausführungsbeispiel der Erfindung wird nachfolgend anhand der Zeichnung näher erläutert.

Dabei zeigen jeweils in schematischer Darstellung:
Figur 1 ein Kommunikationssystem mit mehreren über ein paketorientiertes Kommunikationsnetz gekoppelten Kommunikationseinrichtungen vor Einleitung einer Konferenzschaltung,
Figur 2 das Kommunikationssystem nach Konferenzeinleitung,
Figur 3 ein Ablaufdiagramm zur Veranschaulichung des Signalisierungsablaufs beim Aufbau der Konferenzschaltung und
Figur 4 einen erfindungsgemäßen Kommunikationsserver.

Das vorliegende Ausführungsbeispiel veranschaulicht die Anwendung der Erfindung zum Aufbau eine Dreierkonferenz.

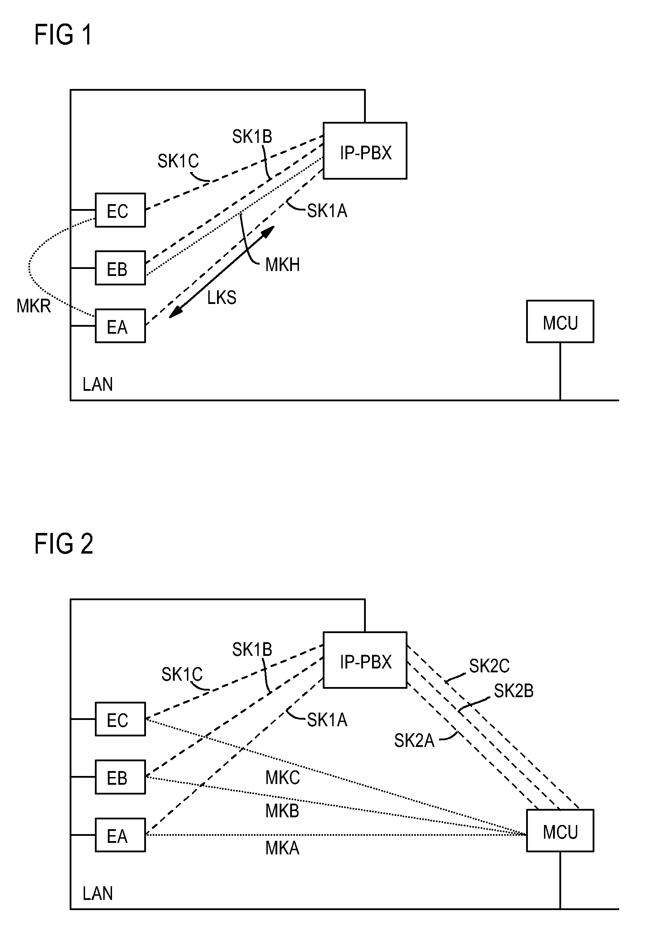

Die **Figuren 1 und 2** zeigen jeweils ein Kommunikationssystem mit einem paketorientierten Kommunikationsnetz LAN, an das Endeinrichtungen EA, EB und EC, ein Kommunikationsserver IP-PBX sowie eine separate paketorientierte Konferenzeinheit MCU gekoppelt sind, in schematischer Darstellung. Das Kommunikationssystem ist im vorliegenden Ausführungsbeispiel als sogenanntes VoIP-System (VoIP: Voice/Video over Internet Protocol), vorzugsweise gemäß der ITU-T-Empfehlung H.323 ausgebildet. Das Kommunikationsnetz LAN ist internetprotokollbasiert und kann beispielsweise mittels eines lokalen Netzes (local area network) oder mittels eines Weitverkehrsnetzes (wide area network), wie z.B. dem Internet, realisiert sein.

Als Endeinrichtungen EA, EB und EC können Endgeräte zur Sprach-, Video- und/oder Multimedia-Echtzeitkommunikation eingesetzt werden. In den Endeinrichtungen EA, EB und EC ist ein leitungsorientiertes Konferenzsteuerprotokoll mittels eines leitungsorientierten Konferenzmoduls sowie ein paketorientiertes Transportprotokoll, hier das Internetprotokoll, implementiert. Zur Implementierung des leitungsorientierten Konferenzsteuerprotokolls bzw. -moduls können vorzugsweise Hardware- und/oder Softwarekomponenten herkömmlicher leitungsorientierter Endeinrichtungen wiederverwendet werden.

Der Kommunikationsserver IP-PBX ist im vorliegenden Ausführungsbeispiel durch eine um paketorientierte Übertragungs- und Steuerkomponenten ergänzte Vermittlungseinrichtung (eine sogenannte IP-PBX) realisiert. Im Kommunikationsserver IP-PBX wird ein leitungsorientiertes Konferenzsteuerprotokoll durch ein leitungsorientiertes Konferenzmodul implementiert. Wie bei den Endeinrichtungen EA, EB und EC kann das leitungsorientierte Konferenzmodul beim Kommunikationsserver IP-PBX vorzugsweise mittels entsprechender Hardware- und/oder Softwarekomponenten von herkömmlichen, leitungsorientierten Vermittlungseinrichtungen realisiert werden.

Als Konferenzeinheit MCU wird eine sogenannte MCU (Multipoint Control Unit), vorzugsweise eine Standard-MCU gemäß der ITU-T-Empfehlung H.323 eingesetzt. Als solche kann die Konferenzeinheit MCU logisch in eine Mehrpunkt-Steuereinheit (MC: Multipoint Controller) und eine Mehrpunkt-Prozessoreinheit (MP: Multipoint Processor) aufgeteilt sein. Die Konferenzeinheit MCU dient im vorliegenden Ausführungsbeispiel als externe Konferenzmischeinrichtung, d.h. sie mischt paketbasierte Medienströme, z.B. Sprach-, Video- und/oder Multimedia-Datenpaketströme, verschiedener Konferenzteilnehmer und verteilt die gemischten Medienströme an die Konferenzteilnehmer, so dass jeder Konferenzteilnehmer die von den anderen Konferenzteilnehmern ausgehenden Medienströme empfängt.

Zwischen den Endeinrichtungen EA, EB und EC und dem Kommunikationsserver IP-PBX sind erste Signalisierungskanäle SK1A, SK1B und SK1C eingerichtet, die in den Figuren 1 und 2 durch strichlierte Linien angedeutet sind. Anstelle eines einzelnen Signalisierungskanals kann zwischen dem Kommunikationsserver IP-PBX und einer Endeinrichtung EA, EB bzw. EC auch eine mehrere, vorzugsweise TCP-basierte (TCP: Transmission Control Protocol) Signalisierungskanäle umfassende Signalisierungskanalgruppe eingerichtet sein. Dementsprechend sei im Folgenden unter dem Begriff erster Signalisierungskanal SK1A, SK1B bzw. SK1C auch eine derartige Gruppe einzelner Signalisierungskanäle verstanden.

**Figur 1** zeigt das Kommunikationssystem vor Einleitung einer Konferenzschaltung durch die Endeinrichtung EA. Das Kommunikationssystem befindet sich in einem Rückfragezustand, in dem die Endeinrichtung EB durch die Endeinrichtung EA auf Halten gelegt wurde und die Endeinrichtung EA in Rückfrage zur Endeinrichtung EC gegangen ist. Dementsprechend ist zwischen der Endeinrichtung EB und dem Kommunikationsserver IP-PBX ein Medienkanal MKH eingerichtet, über den die Endeinrichtung EB beispielsweise Haltemusik, z.B. von einer Haltemusikressource des Kommunikationsservers IP-PBX, während des Haltens bezieht. Weiterhin ist zwischen den Endeinrichtungen EA und EC ein direkt über das Kommunikationsnetz LAN führender Medienkanal MKR, z.B. ein Sprach-, Video- und/oder Multimediakanal, zur Rückfrage eingerichtet. Zwischen den Endeinrichtungen EA und EC besteht somit eine aktive Verbindung, wobei die Verbindungssignalisierung über die ersten Signalisierungskanäle SK1A und SK1C und den Kommunikationsserver IP-PBX verläuft und die Medienströme, d.h. die Nutzdatenströme direkt zwischen den Endeinrichtungen EA und EC übertragen werden. Die Medienkanäle MKH und MKR sind in Figur 1 jeweils durch punktierte Linien angedeutet.

Das Einrichten der Konferenzschaltung wird mittels einer leitungsorientierten Konferenzsteuersignalisierung LKS veranlasst und gesteuert, die über den ersten Signalisierungskanal SK1A (bzw. über einen spezifischen Signalisierungskanal der entsprechenden Signalisierungskanalgruppe) zwischen der Endeinrichtung EA und dem Kommunikationsserver IP-PBX übertragen wird. Die Konferenzsteuersignalisierung LKS basiert auf dem in der Endeinrichtung EA und dem Kommunikationsserver IP-PBX implementierten, leitungsorientierten Konferenzsteuerprotokoll. Zur Durchführung der Konferenzsteuersignalisierung LKS können vorzugsweise vorhandene Hardware- und Softwarekomponenten herkömmlicher leitungsorientierter Konferenzmodule verwendet werden.

**Figur 2** zeigt das Kommunikationssystem nach Einleitung der Konferenzschaltung durch die Endeinrichtung EA. Die Konferenzeinheit MCU ist auf Veranlassung des Kommunikationsservers IP-PBX dynamisch (ad hoc) in die Konferenzschaltung eingebunden. Dabei sind zwischen dem Kommunikationsserver IP-PBX und der Konferenzeinheit MCU internetprotokollbasierte, zweite Signalisierungskanäle SK2A, SK2B und SK2C vorzugsweise gemäß der ITU-T-Empfehlung H.225.0 eingerichtet und jeweils einem der ersten Signalisierungskanäle SK1A, SK1B bzw. SK1C (bzw. einer betreffenden Signalisierungskanalgruppe) zugeordnet. Im vorliegenden Ausführungsbeispiel ist der Signalisierungskanal SK2A dem Signalisierungskanal SK1A, der Signalisierungskanal SK2B dem Signalisierungskanal SK1B und der Signalisierungskanal SK2C dem Signalisierungskanal SK1C zugeordnet. Die Signalisierungskanäle SK2A, SK2B und SK2C basieren auf einem paketorientierten Steuerprotokoll, z.B. gemäß der ITU-T-Empfehlung H.225.0.

Über die einander zugeordneten Signalisierungskanäle SK1A und SK2A, SK1B und SK2B, SK1C und SK2C wird eine die Konferenzschaltung betreffende Signalisierung zwischen den Endeinrichtungen EA, EB und EC und der Konferenzeinheit MCU unter Vermittlung des Kommunikationsservers IP-PBX übertragen. Durch den Kommunikationsserver IP-PBX wird diese Signalisierung entweder transparent weitergeleitet oder zweckentsprechend umgesetzt.

Weiterhin sind als Nutzdatenkanäle paketorientierte Medienkanäle MKA, MKB und MKC, z.B. Sprach-, Video- und/oder Multimediakanäle, eingerichtet, die die Konferenzeinheit MCU über das Kommunikationsnetz LAN direkt mit den Endeinrichtungen EA, EB und EC verbinden. Über die Medienkanäle MKA, MKB und MKC werden die im Rahmen der Konferenzschaltung zu übermittelnden Medienströme direkt zwischen der Konferenzeinheit MCU und den Endeinrichtungen EA, EB und EC übertragen.

Zum Aufbau der Signalisierungskanäle SK2A, SK2B und SK2C sowie der Medienkanäle MKA, MKB und MKC werden die Konferenzeinheit MCU und die Endeinrichtungen EA, EB und EC jeweils durch den Kommunikationsserver IP-PBX in Abhängigkeit von der Konferenzsteuersignalisierung LKS veranlasst.

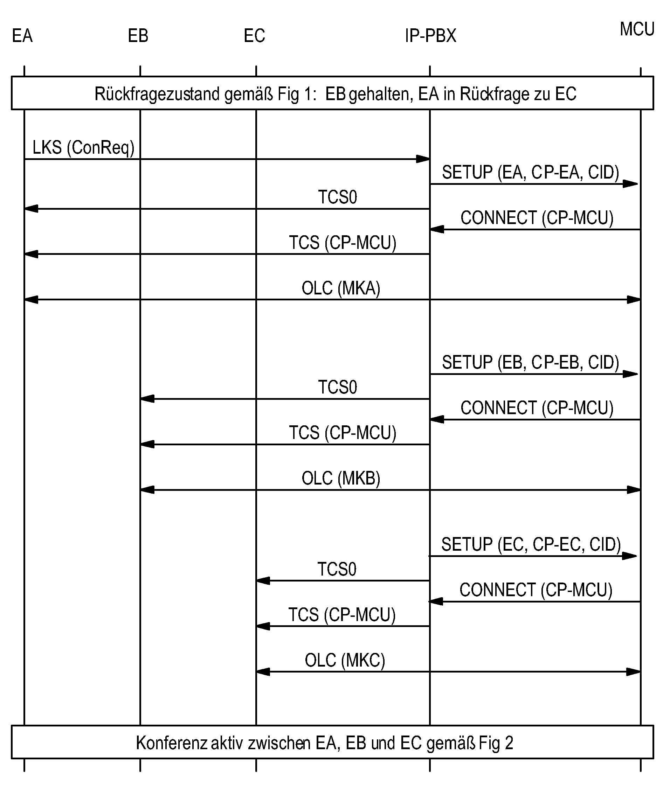

**Figur 3** zeigt ein Ablaufdiagramm zur Veranschaulichung des Signalisierungsablaufs beim Aufbau der Konferenzschaltung. Zu Beginn des Signalisierungsablaufs befindet sich das Kommunikationssystem in dem durch Figur 1 veranschaulichten Rückfragezustand.

Die Konferenzschaltung wird von der Endeinrichtung EA durch Übermitteln einer Konferenzeinleitungsmeldung ConReq, z.B. einer sogenannten Conference-Request-Meldung, zum Kommunikationsserver IP-PBX veranlasst. Die Konferenzeinleitungsmeldung ConReq wird im Rahmen der leitungsorientierten Konferenzsteuersignalisierung LKS über den Signalisierungskanal SK1A (bzw. über einen spezifischen Signalisierungskanal der betreffenden Signalisierungskanalgruppe) übertragen. Alternativ dazu kann anstelle der Konferenzeinleitungsmeldung ConReq eine sogenannte Stimulusnachricht, z.B. eine Tastenadresse, je nach dem zwischen der Endeinrichtung EA und dem Konferenzserver IP-PBX verwendeten Konferenzsteuerprotokoll übermittelt werden.

Anhand der Konferenzeinleitungsmeldung ConReq wird durch den Kommunikationsserver IP-PBX deren Absender, hier die Endeinrichtung EA, ermittelt. Das Eintreffen der Konferenzeinleitungsmeldung ConReq veranlasst den Kommunikationsserver IP-PBX zum Übermitteln einer Setup-Meldung SETUP als Kanalaufbaumeldung, vorzugsweise gemäß der ITU-T-Empfehlung H.225.0 zur Konferenzeinheit MCU. Durch die Setup-Meldung SETUP wird der Aufbau des Signalisierungskanals SK2A veranlasst. Der aufzubauende Signalisierungskanal SK2A wird dabei dem Signalisierungskanal SK1A durch den Kommunikationsserver IP-PBX zugeordnet.

Die Setup-Meldung SETUP enthält eine die Endeinrichtung EA identifizierende Information, eine Konferenzkennung CID sowie eine Fähigkeitsinformation CP-EA, die spezifische Kommunikationsfähigkeiten der Endeinrichtung EA angibt. Die Setup-Meldung SETUP enthält demnach Informationselemente, die sich nicht auf den Kommunikationsserver IP-PBX selbst, sondern auf die Endeinrichtung EA beziehen, für die der Kommunikationsserver IP-PBX den Signalisierungskanal SK2A aufbaut. Die Setup-Meldung SETUP wird von der Konferenzeinheit MCU durch eine Connect-Meldung CONNECT, vorzugsweise gemäß der ITU-T-Empfehlung H.225.0 quittiert. Die Connect-Meldung CONNECT enthält eine Fähigkeitsinformation CP-MCU, die spezifische Kommunikationsfähigkeiten der Konferenzeinheit MCU angibt.

Durch die Konferenzeinleitungsmeldung ConReq wird der Kommunikationsserver IP-PBX weiterhin dazu veranlasst, die Medienströme umzukonfigurieren, d.h. die Medienkanäle MKR und MKH zu schließen und die neuen, direkten Medienkanäle MKA, MKB und MKC zwischen den Endeinrichtungen EA, EB und EC und der Konferenzeinheit MCU aufzubauen. Zu diesem Zweck wird vom Kommunikationsserver IP-PBX eine sogenannte Terminal-Capability-Set-Meldung TCS0 mit leerer Fähigkeitsmenge, vorzugsweise gemäß der ITU-T-Empfehlung H.245, als erste Signalisierungsmeldung zur Endeinrichtung EA übermittelt. Die Terminal-Capability-Set-Meldung TCS0 veranlasst die empfangende Endeinrichtung, hier EA, indirekt zum Schließen aller ihrer Nutzdaten-Sendekanäle, hier des Medienkanals MKR. Nach Empfang der Connect-Meldung CONNECT übermittelt der Kommunikationsserver IP-PBX ferner eine Terminal-Capability-Set-Meldung TCS mit nichtleerer Fähigkeitsmenge als zweite Signalisierungsmeldung, vorzugsweise gemäß der H.245-Empfehlung, zur Endeinrichtung EA. Mit der Terminal-Capability-Set-Meldung TCS wird die Fähigkeitsinformation CP-MCU zur Endeinrichtung EA übermittelt. Die Terminal-Capability-Set-Meldung TCS veranlasst die empfangende Endeinrichtung, hier EA, indirekt zum Öffnen eines oder mehrer neuer Nutzdaten-Sendekanäle zur Konferenzeinheit MCU. Die Terminal-Capability-Set-Meldungen TCS0 und TCS werden über den Signalisierungskanal SK1A (bzw. über einen spezifischen Signalisierungskanal der entsprechenden Signalisierungskanalgruppe) übertragen. Ein derartiges Schließen und Öffnen von Nutzdatensendekanälen durch Terminal-Capability-Set-Meldungen wird häufig auch als Pause-and-Rerouting-Prozedur, im vorliegenden Anwendungsfall als Third-Party-Pause-and-Rerouting-Prozedur bezeichnet.

Nach Austausch der jeweiligen Fähigkeitsinformation CP-EA und CP-MCU zwischen der Endeinrichtung EA und der Konferenzeinheit MCU wird zwischen diesen der Medienkanal MKA durch Übermitteln einer Kanalöffnungsmeldung OLC (Open Logical Channel), vorzugsweise gemäß H.245-Empfehlung aufgebaut. Die Kanalöffnungsmeldung OLC wird über die Signalisierungskanäle SK1A (bzw. über einen spezifischen Signalisierungskanal der entsprechenden Signalisierungskanalgruppe) und SK2A übermittelt.

Die vorstehende Prozedur wird sinngemäß auch für die Endeinrichtungen EB und EC sequentiell oder parallel durchgeführt. D.h. mittels jeweiliger Setup- und Connect-Meldungen werden die Signalisierungskanäle SK2B bzw. SK2C und mittels jeweiliger Terminal-Capability-Set-Meldungen TCS0, TCS und Kanalöffnungsmeldungen OLC werden die Medienkanäle MKB bzw. MKC aufgebaut. Schließlich besteht zwischen der Konferenzeinheit MCU und den Endeinrichtungen EA, EB und EC jeweils eine Punkt-zu-Punkt-Kommunikationsbeziehung, wobei die Signalisierung jeweils über den Kommunikationsserver IP-PBX geführt wird.

Alternativ zu einer Übermittlung von jeweils einer separaten Setup-Meldung für jede in die Konferenzschaltung einzubeziehende Endeinrichtung EA, EB und EC, kann der Konferenzserver IP-PBX die erforderlichen Informationen über alle einzubeziehenden Endeinrichtungen EA, EB, und EC in einer einzigen Setup-Meldung zur Konferenzeinheit MCU übermitteln.

Über die aufgebauten Medienkanäle MKA, MKB und MKC werden die im Rahmen der Konferenzschaltung zu übertragenden Medienströme direkt zwischen der Konferenzeinheit MCU und jeder einzelnen Endeinrichtung EA, EB und EC übertragen. Anhand der in den Setup-Meldungen SETUP übertragenen Konferenzkennung CID kann die Konferenzeinheit MCU die empfangenen Setup-Meldungen SETUP als zur gleichen Konferenzschaltung zugehörig erkennen und dementsprechend die ankommenden Medienströme mischen und die gemischten Medienströme an die an der Konferenzschaltung beteiligten Endeinrichtungen zurücksenden. Die Konferenzschaltung ist damit aktiv.

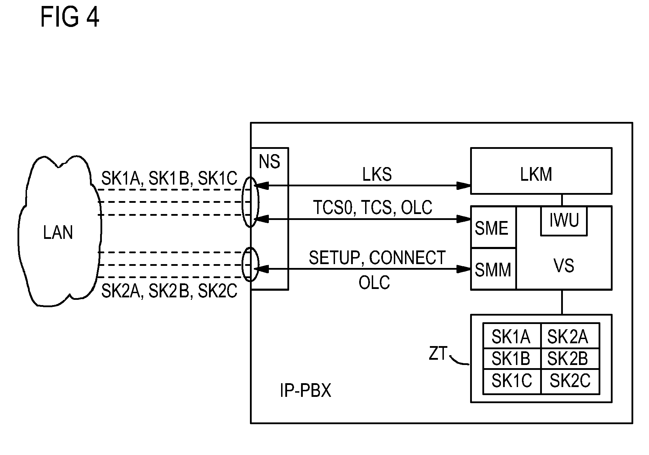

**Figur 4** zeigt den erfindungsgemäßen Konferenzserver IP-PBX in detaillierterer Darstellung. Der Konferenzserver IP-PBX verfügt über eine vorzugsweise internetprotokollbasierte Netzschnittstelle NS zum Anschluss an das Kommunikationsnetz LAN. Die gemäß dem vorliegenden Ausführungsbeispiel in das Kommunikationsnetz LAN führenden Signalisierungskanäle SK1A, SK1B, SK1C, SK2A, SK2B und SK2C sind durch strichlierte Linien angedeutet. Als weitere Funktionskomponenten weist der Konferenzserver IP-PBX ein leitungsorientiertes Konferenzmodul LKM, eine Vermittlungssteuerung VS sowie eine Zuordnungstabelle ZT auf.

Das leitungsorientierte Konferenzmodul LKM dient zum Verarbeiten und Steuern der leitungsorientierten Konferenzsteuersignalisierung LKS. Das Konferenzmodul LKM kann durch Hardware- und/oder Softwarekomponenten, z.B. in Form von Programm-Objekten im Sinne eines objektorientierten Programmiermodells, realisiert sein. Vorzugsweise können vorhandene Hardware- und/oder Softwarekomponenten herkömmlicher, leitungsorientierter Konferenzeinrichtungen wiederverwendet werden. Das Konferenzmodul LKM tauscht die Konferenzsteuersignalisierung LKS über die Netzschnittstelle NS und den Signalisierungskanal SK1A mit der Endeinrichtung EA aus.

Die Vermittlungssteuerung VS dient im Allgemeinen zum Vermitteln von Verbindungen im Kommunikationssystem und im Besonderen zum Umkonfigurieren von Medienströmen im Zuge des Aufbaus der Konferenzschaltung. Im vorliegenden Ausführungsbeispiel veranlasst die Vermittlungssteuerung VS die Endeinrichtungen EA, EB und EC sowie die Konferenzeinheit MCU zum Aufbau der Medienkanäle MKA, MKB und MKC und der Signalisierungskanäle SK2A, SK2B und SK2C. Die Vermittlungssteuerung VS kann vorzugsweise unter Verwendung von standardisierten Bausteinfunktionen realisiert werden.

Die Vermittlungssteuerung VS verfügt über eine Umsetzeinrichtung IWU, an die das Konferenzmodul LKM angekoppelt ist. Die Umsetzeinrichtung IWU dient zum Umsetzen der leitungsorientierten Konferenzsteuersignalisierung LKS in jeweilige Steuermeldungen für die Endeinrichtungen EA, EB und EC sowie für die Konferenzeinheit MCU. Hierbei wird das leitungsorientierte Konferenzsteuerprotokoll in die jeweiligen Steuerprotokolle für die Endeinrichtungen EA, EB und EC sowie für die Konferenzeinheit MCU umgesetzt.

Die Vermittlungssteuerung VS verfügt weiterhin über Steuermittel SME zum Ansteuern der Endeinrichtungen EA, EB und EC sowie über Steuermittel SMM zum Ansteuern der Konferenzeinheit MCU. Durch die Steuermittel SME werden die Terminal-Capability-Set-Meldungen TCS0 und TCS sowie die Kanalöffnungsmeldungen OLC über die Netzschnittstelle NS und die Signalisierungskanäle SK1A, SK1B und SK1C mit den Endeinrichtungen EA, EB und EC ausgetauscht. Entsprechend werden durch die Steuermittel SMM die Setup-Meldungen SETUP, die Connect-Meldungen CONNECT sowie die Kanalöffnungsmeldungen OLC über die Netzschnittstelle NS und die Signalisierungskanäle SK2A, SK2B und SK2C mit der Konferenzeinheit MCU ausgetauscht.

An die Vermittlungssteuerung VS ist weiterhin die Zuordnungstabelle ZT gekoppelt, in der die Signalisierungskanäle SK1A, SK1B und SK1C den Signalisierungskanälen SK2A, SK2B und SK2C jeweils paarweise zugeordnet sind.

Die Anwendung der Erfindung ist nicht auf das vorliegende Ausführungsbeispiel beschränkt. Insbesondere ist die Anzahl der Endeinrichtungen vor der Konferenzeinleitung nicht auf drei Endeinrichtungen festgelegt. So können beispielsweise durchaus mehr als ein Endgerät oder auch gar kein Endgerät im Haltezustand sein, bevor die Konferenz eingeleitet wird. Nach erfolgter Konferenzeinleitung können weitere Endeinrichtungen in die Konferenzschaltung eingebunden werden und zwar sowohl durch die ursprünglich einleitende Endeinrichtung als auch durch andere Endeinrichtungen. Dabei sind außer sogenannten Ad-hoc-Konferenzen, z.B. aus einem Rückfragezustand, auch andere Konferenzvarianten, wie z.B. sogenannte Meet-me-Konferenzen realisierbar.

Weiterhin können die an der Konferenzschaltung teilnehmenden Endeinrichtungen auch an verschiedenen Kommunikationsservern angemeldet sein. Die Konferenzeinheit MCU kann ihre Mischfunktion auch für mehrere Kommunikationsserver bereitstellen, d.h. es ist keine 1:1 Zuordnung zwischen Kommunikationsserver und Konferenzeinheit erforderlich.

Die Erfindung ist ferner sowohl für sogenannte Corporate-VoIP-Systeme als auch für sogenannte VoIP-Carrier-Systeme einsetzbar.

Anstelle von VoIP-Endeinrichtungen können auch sogenannte TDM-Endpunkte (TDM: Time Division Multiplex) in eine Konferenzschaltung eingebunden werden. In diesem Fall werden die für die Erfindung relevanten Funktionen einer Endeinrichtung durch eine Gatewayeinrichtung ausgeführt.

Zur Erhöhung der Leistungsfähigkeit können weiterhin mehrere Konferenzeinheiten kaskadiert angeordnet werden.

Darüber hinaus kann die Erfindung anstatt in einer H.323-Kommunikationsumgebung in einer Kommunikationsumgebung gemäß dem IETF-Standard SIP (Session Initiation Protocol) eingesetzt werden. In diesem Fall ist eine Konferenzeinheit gemäß dem SIP-Standard einzusetzen.

Schließlich kann das erfindungsgemäße Verfahren durch entsprechende Varianten beim Umkonfigurieren der Medienkanäle außer zum Steuern von Konferenzschaltungen auch zum Steuern anderer Leistungsmerkmale, wie z.B. Aufschalten (Intrusion) oder "silent monitoring" verwendet werden.

## Patentansprüche

1. Verfahren zum Steuern einer Konferenzschaltung zwischen mehreren Endeinrichtungen (EA, EB, EC) in einem paketorientierten Kommunikationsnetz (LAN), wobei
eine Konferenzsteuersignalisierung (LKS) über ein paketorientiertes Transportprotokoll zwischen einer ersten (EA) der Endeinrichtungen und einem Kommunikationsserver (IP-PBX) des Kommunikationsnetzes (LAN) übertragen wird, und durch den Kommunikationsserver (IP-PBX) abhängig von der Konferenzsteuersignalisierung (LKS) ein Aufbau von paketorientierten Medienkanälen (MKA, MKB, MKC) zwischen den Endeinrichtungen (EA, EB, EC) und einer paketorientierten Konferenzmischeinrichtung (MCU) veranlasst wird, **dadurch gekennzeichnet,**
**dass** die Konferenzsteuersignalisierung (LKS)
- leitungsorientiert ist,
- durch ein leitungsorientiertes Konferenzmodul (LKM) des Kommunikationsservers verarbeitet wird, und
- durch eine an das leitungsorientierte Konferenzmodul (LKM) angekoppelte Umsetzeinrichtung (IWU) einer Vermittlungssteuerung (VS) des Kommunikationsservers (IP-PBX) in Steuermeldungen für die Endeinrichtungen (EA, EB, EC) umgesetzt wird.

2. Verfahren nach Anspruch 1,
**dadurch gekennzeichnet,**
**dass** für bestehende, erste Signalisierungskanäle (SK1A, SK1B, SK1C) zwischen dem Kommunikationsserver (IP-PBX) und den Endeinrichtungen (EA, EB, EC) durch den Kommunikationsserver (IP-PBX) jeweils ein paketorientierter, zweiter Signalisierungskanal (SK2A, SK2B, SK2C) zwischen dem Kommunikationsserver (IP-PBX) und der Konferenzmischeinrichtung (MCU) eingerichtet und dem jeweiligen ersten Signalisierungskanal (SK1A, SK1B, SK1C) zugeordnet wird.

3. Verfahren nach Anspruch 2,
**dadurch gekennzeichnet,**
**dass** der jeweilige erste (SK1A, SK1B, SK1C) und/oder zweite (SK2A, SK2B, SK2C) Signalisierungskanal durch den Kommunikationsserver (IP-PBX) der Konferenzsteuersignalisierung (LKS) zwischen dem Kommunikationsserver (IP-PBX) und der ersten Endeinrichtung (EA) zugeordnet wird.

4. Verfahren nach einem der vorhergehenden Ansprüche,
**dadurch gekennzeichnet,**
**dass** der Aufbau der Medienkanäle (MKA, MKB, MKC) zumindest teilweise parallel erfolgt.

5. Verfahren nach einem der vorhergehenden Ansprüche,
**dadurch gekennzeichnet,**
**dass** der Kommunikationsserver (IP-PBX) zu den Endeinrichtungen (EA, EB, EC) im Rahmen des Aufbaus der Medienkanäle (MKA, MKB, MKC) jeweils eine erste Signalisierungsmeldung (TCS0), durch die ein Schließen geöffneter Medienkanäle veranlasst wird, sowie eine zweite Signalisierungsmeldung (TCS), durch die ein Öffnen eines Medienkanals zur Konferenzmischeinrichtung (MCU) veranlasst wird, übermittelt.

6. Verfahren nach einem der vorhergehenden Ansprüche,
**dadurch gekennzeichnet,**
**dass** der Kommunikationsserver (IP-PBX) im Rahmen des Aufbaus der Medienkanäle (MKA, MKB, MKC) mindestens eine Kanalaufbaumeldung (SETUP) mit Informationen (CP-EA, CP-EB, CP-EC) über die an der Konferenzschaltung zu beteiligenden Endeinrichtungen (EA, EB, EC) zur Konferenzmischeinrichtung (MCU) übermittelt.

7. Verfahren nach einem der vorhergehenden Ansprüche,
**dadurch gekennzeichnet,**
**dass** der Kommunikationsserver (IP-PBX) und die Konferenzmischeinrichtung (MCU) einander in Abhängigkeit von ihrer Betriebslast dynamisch zugeordnet werden.

8. Kommunikationsserver (IP-PBX) zum Steuern einer Konferenzschaltung zwischen mehreren Endeinrichtungen (EA, EB, EC) in einem paketorientierten Kommunikationsnetz (LAN), mit einer auf einem paketorientierten Transportprotokoll basierenden Netzschnittstelle (NS) zum Anschluss an das Kommunikationsnetz (LAN),
einem Konferenzmodul (LKM) zum Verarbeiten einer zwischen dem Kommunikationsserver (IP-PBX) und einer ersten (EA) der Endeinrichtungen über das Transportprotokoll zu übertragenden Konferenzsteuersignalisierung (LKS), und
einer Vermittlungssteuerung (VS) zum Veranlassen eines Aufbaus von paketorientierten Medienkanälen (MKA, MKB, MKC) zwischen den Endeinrichtungen (EA, EB, EC) und einer paketorientierten Konferenzmischeinrichtung (MCU) des Kommunikationsnetzes (LAN) in Abhängigkeit von der Konferenzsteuersignalisierung (LKS),
**dadurch gekennzeichnet,**
- **dass** das Konferenzmodul (LKM) sowie die Konferenzsteuersignalisierung (LKS) leitungsorientiert sind, und
- **dass** die Vermittlungssteuerung (VS) eine an das Konferenzmodul (LKM) angekoppelte Umsetzeinrichtung (IWU) zum Umsetzen der leitungsorientierten Konferenzsteuersignalisierung (LKS) in Steuermeldungen für die Endeinrichtungen (EA, EB, EC) aufweist.

9. Kommunikationsserver nach Anspruch 8,
**gekennzeichnet durch**
eine Zuordnungstabelle (ZT) zum Zuordnen von bestehenden, ersten Signalisierungskanälen (SK1A, SK1B, SK1C) zwischen dem Kommunikationsserver (IP-PBX) und den Endeinrichtungen (EA, EB, EC) zu jeweils einem zwischen dem Kommunikationsserver (IP-PBX) und der Konferenzmischeinrichtung (MCU) einzurichtenden, paketorientierten, zweiten Signalisierungskanal (SK2A, SK2B, SK2C).

10. Kommunikationsserver nach Anspruch 8 oder 9,
**gekennzeichnet durch**
Steuermittel (SMM) zum Ansteuern der Konferenzmischeinrichtung (MCU) in Abhängigkeit von der Konferenzsteuersignalisierung (LKS).

11. Kommunikationsserver nach einem der Ansprüche 8 bis 10, **gekennzeichnet durch**
Steuermittel (SME) zum Ansteuern der Endeinrichtungen (EA, EB, EC) in Abhängigkeit von der Konferenzsteuersignalisierung (LKS).

12. Kommunikationsserver nach einem der Ansprüche 8 bis 11, **gekennzeichnet durch**
eine Umsetzeinrichtung (IWU) zum Umsetzen der Konferenzsteuersignalisierung (LKS) in Steuermeldungen (TCS0, TCS, SETUP) für die Endeinrichtungen (EA, EB, EC) und die Konferenzmischeinrichtung (MCU).

## Claims

1. A method of controlling a conference call between multiple terminal devices (EA, EB, EC) in a packet-oriented communication network (LAN), wherein
a conference control signaling (LKS) is transmitted via a packet-oriented transport protocol between a first one (EA) of the terminal devices and a communication server (IP-PBX) of the communication network (LAN) and the set-up of package oriented media channels (MKA, MKB, MKC) between the terminal devices (EA, EB, EC) and a packet-oriented conference mixing device (MCU) is initiated by the communication server (IP-PBX) depending on the conference control signaling (LKS), **characterised in that**
the conference control signaling (LKS)
- is circuit-oriented,
- is processed by a circuit-oriented conference module (LKM) of the communication server, and
- is converted into control messages for the terminal devices (EA, EB, EC) by a conversion device (IWU) of a switching control (VS) of the communication server (IP-PBX) coupled to the circuit-oriented conference module (LKM).

2. The method according to claim 1
**characterised in that**
for existing first signaling channels (SK1A, SK1B, SK1C) between the communication server (IP-PBX) and the terminal devices (EA, EB, EC) a respective packet-oriented second signaling channel (SK2A, SK2B, SK2C) between the communication server (IP-PBX) and the conference mixing device (MCU) is set up through the communication server (IP-PBX) and allocated to the respective first signaling channel (SK1A, SK1B, SK1C).

3. The method according to claim 2
**characterised in that**
the respective first (SK1A, SK1B, SK1C) and/or second (SK2A, SK2B, SK2C) signaling channel is allocated by the communication server (IP-PBX) to the conference control signaling (LKS) between the communication server (IP-PBX) and the first terminal device (EA).

4. The method according to any of the preceding claims **characterised in that**
at least a portion of the media channels (MKA, MKB, MKC) is set up in parallel.

5. The method according to any of the preceding claims **characterised in that**
in the context of the set-up of the media channels (MKA, MKB, MKC), the communication server (IP-PBX) transmits to each of the terminal devices (EA, EB, EC) a first signaling message (TCS0) causing opened media channels to close as well as a second signaling message (TCS) causing a media channel to open to the conference mixing device (MCU).

6. The method according to any of the preceding claims **characterised in that**
in the context of the set-up of the media channels (MKA, MKB, MKC), the communication server (IP-PBX) transmits at least one channel setup message (SETUP) with information (CP-EA, CP-EB, CP-EC) about the terminal devices (EA, EB, EC) to be involved in the conference call to the conference mixing device (MCU).

7. The method according to any of the preceding claims **characterised in that**
the communication server (IP-PBX) and the conference mixing device (MCU) are dynamically allocated to each other depending on their operating load.

8. A communication server (IP-PBX) for controlling a conference call between several terminal devices (EA, EB, EC) in a packet-oriented communication network (LAN) comprising a network interface (NS) based on a packet-oriented transport protocol for connection to the communication network (LAN), a conference module (LKM) for processing a conference control signaling (LKS) to be transmitted between the communication server (IP-PBX) and a first one (EA) of the terminal devices via the transport protocol, and
a switching control (VS) for initiating a set-up of packet-oriented media channels (MKA, MKB, MKC) between the terminal devices (EA, EB, EC) and a packet-oriented conference mixing device (MCU) of the communication network (LAN) depending on the conference control signaling (LKS)
**characterised in that**
- the conference module (LKM) and the conference control signaling (LKS) are circuit-oriented and
- that the switching control (VS) comprises a conversion device (IWU) coupled to the conference module (LKM) for converting the circuit-oriented conference control signaling (LKS) into control messages for the terminal devices (EA, EB, EC).

9. The communication server according to claim 8
**characterised by**
an allocation table (ZT) for allocating existing first signaling channels (SK1A, SK1B, SK1C) between the communication server (IP-PBX) and the terminal devices (EA, EB, EC) to a packet-oriented second signaling channel (SK2A, SK2B, SK2C) to be set up between the communication server (IP-PBX) and the conference mixing device (MCU).

10. The communication server according to claim 8 or 9 **characterised by**
control means (SMM) for activating the conference mixing device (MCU) depending on the conference control signaling (LKS).

11. The communication server according to any of the claims 8 to 10
**characterised by**
control means (SME) for activating the terminal devices (EA, EB, EC) depending on the conference control signaling (LKS).

12. The communication server according to any of the claims 8 to 11
**characterised by**
a conversion device (IWU) for converting the conference control signaling (LKS) into control messages (TCS0, TCS, SETUP) for the terminal devices (EA, EB, EC) and the conference mixing device (MCU).

## Revendications

1. Procédé de commande d'un circuit de conférence entre plusieurs dispositifs terminaux (EA, EB, EC) dans un réseau de communication orienté sur les paquets (LAN), une signalisation de commande de conférence (LKS) étant transmise par un protocole de transport orienté sur les paquets entre un premier (EA) des dispositifs terminaux et un serveur de communication (IP-PBX) du réseau de communication (LAN), et un établissement de canaux de médias (MKA, MKB, MKC) orientés sur les paquets entre les dispositifs terminaux (EA, EB, EC) et un dispositif de mélange de conférence (MCU) orienté sur les paquets étant entraîné par le serveur de communication (IP-PBX) selon la signalisation de commande de conférence (LKS), **caractérisé en ce que**
la signalisation de commande de conférence (LKS)
- est orientée sur les câbles,
- est traitée par un module de conférence orienté sur les câbles (LKM) du serveur de communication et
- est convertie en messages de commande pour les dispositifs terminaux (EA, EB, EC) par un dispositif de conversion (IWU) couplé au module de conférence orienté sur les câbles (LKM) d'une commande de transmission (VS) du serveur de communication (IP-PBX).

2. Procédé selon la revendication 1,
**caractérisé en ce que** respectivement un second canal de signalisation (SK2A, SK2B, SK2C) orienté sur les paquets entre le serveur de communication (IP-PBX) et le dispositif de mélange de conférence (MCU) est aménagé pour des premiers canaux de signalisation existants (SK1A, SK1B, SK1C) entre le serveur de communication (IP-PBX) et les dispositifs terminaux (EA, EB, EC) par le serveur de communication (IP-PBX), et associé au premier canal de signalisation respectif (SK1A, SK1B, SK1C).

3. Procédé selon la revendication 2, **caractérisé en ce que** le premier (SK1A, SK1B, SK1C) et/ou le second (SK2A, SK2B, SK2C) canal de signalisation respectif est associé par le serveur de communication (IP-PBX) à la signalisation de commande de conférence (LKS) entre le serveur de communication (IP-PBX) et le premier dispositif terminal (EA).

4. Procédé selon l'une quelconque des revendications précédentes, **caractérisé en ce que** l'établissement des canaux de médias (MKA, MKB, MKC) est effectué au moins en partie parallèlement.

5. Procédé selon l'une quelconque des revendications précédentes, **caractérisé en ce que** le serveur de communication (IP-PBX) transmet aux dispositifs terminaux (EA, EB, EC) dans le cadre de l'établissement des canaux de médias (MKA, MKB, MKC) respectivement un premier message de signalisation (TCS0), par lequel est entraînée une fermeture des canaux de médias ouverts, ainsi qu'un second message de signalisation (TCS), par lequel est entraînée une ouverture d'un canal de médias vers le dispositif de mélange de conférence (MCU).

6. Procédé selon l'une quelconque des revendications précédentes, **caractérisé en ce que** le serveur de communication (IP-PBX) transmet au dispositif de mélange de conférence (MCU) dans le cadre de l'établissement des canaux de médias (MKA, MKB, MKC) au moins un message d'établissement de canal (SETUP) avec des informations (CP-EA, CP-EB, CP-EC) par les dispositifs terminaux (EA, EB, EC) devant participer au circuit de conférence.

7. Procédé selon l'une quelconque des revendications précédentes, **caractérisé en ce que** le serveur de communication (IP-PBX) et le dispositif de mélange de conférence (MCU) sont associés dynamiquement l'un à l'autre en fonction de leur charge de fonctionnement.

8. Serveur de communication (IP-PBX) pour la commande d'un circuit de conférence entre plusieurs dispositifs terminaux (EA, EB, EC) dans un réseau de communication orienté sur les paquets (LAN), avec une interface de réseau (NS) se basant sur un protocole de transport orienté sur les paquets pour le raccordement au réseau de communication (LAN),
un module de conférence (LKM) pour le traitement d'une signalisation de commande de conférence (LKS) à transmettre entre le serveur de communication (IP-PBX) et un premier (EA) des dispositifs terminaux par le protocole de transport et
une commande de transmission (VS) pour entraîner un établissement de canaux de médias (MKA, MKB, MKC) orientés sur les paquets entre les dispositifs terminaux (EA, EB, EC) et un dispositif de mélange de conférence (MCU) orienté sur les paquets du réseau de communication (LAN) en fonction de la signalisation de commande de conférence (LKS),
**caractérisé en ce que**
- le module de conférence (LKM) ainsi que la signalisation de commande de conférence (LKS) sont orientés sur les câbles et
- la commande de transmission (VS) présente un dispositif de conversion (IWU) couplé au module de conférence (LKM) pour la conversion de la signalisation de commande de conférence (LKS) orientée sur les câbles en messages de commande pour les dispositifs terminaux (EA, EB, EC).

9. Serveur de communication selon la revendication 8, **caractérisé par** un tableau d'association (ZT) pour l'association de premiers canaux de signalisation (SK1A, SK1B, SK1C) existants entre le serveur de communication (IP-PBX) et les dispositifs terminaux (EA, EB, EC) à respectivement un second canal de signalisation (SK2A, SK2B, SK2C) orienté sur les paquets, à aménager entre le serveur de communication (IP-PBX) et le dispositif de mélange de conférence (MCU).

10. Serveur de communication selon la revendication 8 ou 9, **caractérisé par** des moyens de commande (SMM) pour la commande du dispositif de mélange de conférence (MCU) en fonction du signal de commande de conférence (LKS).

11. Serveur de communication selon l'une quelconque des revendications 8 à 10, **caractérisé par** des moyens de commande (SME) pour la commande des dispositifs terminaux (EA, EB, EC) en fonction de la signalisation de commande de conférence (LKS).

12. Serveur de communication selon l'une quelconque des revendications 8 à 11, **caractérisé par** un dispositif de conversion (IWU) pour la conversion de la signalisation de commande de conférence (LKS) en messages de commande (TCS0, TCS, SETUP) pour les dispositifs terminaux (EA, EB, EC) et le dispositif de mélange de conférence (MCU).
